Europäisches Patentamt

(19) European Patent Office

Office européen des brevets

(11) EP 0 337 889 B2

(12) **NOUVEAU FASCICULE DE BREVET EUROPEEN**

(45) Date de publication et mention de la décision concernant l'opposition:
**17.07.1996 Bulletin 1996/29**

(45) Mention de la délivrance du brevet:
**10.03.1993 Bulletin 1993/10**

(21) Numéro de dépôt: **89401022.2**

(22) Date de dépôt: **13.04.1989**

(51) Int. Cl.$^6$: **A23L 1/236**, C07H 3/06

(54) **Application comme produits sucrants faiblement caloriques d'oligosaccharides fructosylés et les produits ou boissons alimentaires ou diététiques les renfermant**

Verwendung von zuckrigen, kalorienarmen Produkten wie Oligofruktosylsacchariden und Nahrungsmittelprodukten oder sie enthaltende Getränke oder diätische Produkte

Application of weak caloric sugars like oligofructosylsaccharides and food products or beverages or dietetic products including them

(84) Etats contractants désignés:
**AT BE CH DE ES FR GB GR IT LI LU NL SE**

(30) Priorité: **14.04.1988 FR 8804944**

(43) Date de publication de la demande:
**18.10.1989 Bulletin 1989/42**

(73) Titulaire: **ROUSSEL-UCLAF**
**F-75007 Paris (FR)**

(72) Inventeurs:
• **Biton, Jacques**
**F-60610 La Croix Saint Ouen (FR)**
• **Gellf, Gérard**
**F-60610 La Croix Saint Ouen (FR)**
• **Michel, Jean-Marc**
**F-60200 Compiègne (FR)**
• **Paul, François Bernard**
**F-31400 Toulouse (FR)**
• **Monsan, Pierre Frédéric**
**F-31700 Blagnac (FR)**

(74) Mandataire: **Bourgouin, André et al**
**Département des Brevets**
**ROUSSEL UCLAF**
**111, route de Noisy**
**B.P. no 9**
**93230 Romainville (FR)**

(56) Documents cités:
**DE-A- 2 210 128**     **FR-A- 2 584 739**
**GB-A- 1 471 613**     **GB-A- 2 072 679**
**GB-A- 2 105 338**     **JP-A- 6 028 919**
**US-A- 4 613 377**

• **PATENT ABSTRACTS OF JAPAN, vol. 9, no. 309 (C-318)(2032), 5 décembre 1985**
• **American Institute of Nutrition, Journal of Nutrition, 117, 846, 1987, Ziesenitz et al**
• **Derwent Patent Abstract, 8 décembre 1986, JP-A-61 277 695**
• **Derwent Patent Abstract, 1 décembre 1986, JP-A-61 271 295**
• **American Institute of Nutrition, Journal of Nutrition 114, 1574-1581, 1984, T. Oku et al**
• **Nutrition Magazine, vol. 44, no. 6, 291-306, 1986, T. Oku**
• **Symposium "Chemical Aspects of Food Enzymes", 16-17 septembre 1986, Reading, GB, S. Pedersen et al**
• **Proceedings of a workshop held at the TNO-CIVO Institutes, Zeist, 27-28 novembre 1986, Pudoc Wageningen, 1987**

EP 0 337 889 B2

**Description**

La présente invention concerne l'application comme produits sucrants faiblement caloriques d'oligosaccharides fructosylés et les aliments, produits diététiques et boissons les renfermant.

La grande majorité du sucre alimentaire est constituée de saccharose qui est un disaccharide comprenant un glucose et un fructose liés entre eux par leurs carbones anomériques.

Hormis un rôle d'agent sucrant dans l'alimentation, le saccharose a aussi un rôle énergétique, puisque la combustion de 1 g de saccharose apporte 4 Kcal à notre organisme. Par ses propriétés fonctionnelles (température de fusion, solubilité, capacité à cristalliser), il assure aussi un rôle d'agent de structure et de conservateur dans les aliments.

Depuis peu, il existe une forte tendance à la réduction de l'apport calorique des aliments, de façon à prévenir l'obésité (plats cuisines "allégés", boissons "diététiques" ...) et par voie de conséquence, une demande pour des sucres, substituts de saccharose faiblement caloriques.

Il a déjà été trouvé que certains oligosaccharides fructosylés possèdent à la fois un pouvoir édulcorant approprié et des propriétés faiblement cariogènes et/ou anti-carie (BF 2 450 876), mais aucune mention n'est faite du pouvoir calorique des produits cités.

Par ailleurs par le brevet allemand DE 2.210.128 on connaissait des oligosaccharides liés entre eux par des liaisons $\alpha$.

Cependant, ces produits, comme tous les malto-oligosaccharides son caloriques.

Or, il vient d'être découvert et c'est l'objet de la présente invention que des oligosaccharides fructosylés peuvent réduire aussi, de façon inattendue, l'apport calorique journalier par rapport au saccharose. Il faut préciser en effet, que le fait qu'un sucre soit acariogène ou faiblement cariogène n'implique pas du tout qu'il soit faiblement calorique.

On peut citer, entre autres, les cas du xylitol (J.J. BEEREBOOM CRC Critical Reviews in Food Science and Nutrition May 1979, p. 401-413) du leucrose ou 5-0-alpha-(D-glucopyranosyl)D-fructopyranose (USP 4 693 974) et des "coupling-sugars" (TSUJI Y. et Coll., J. Nutr. Sci. Vitaminol., 32, 93-100, 1986) oligosaccharides fructosylés produits par la Société HAYASHIBARA (BF 2 559 490), qui sont faiblement carlogènes mais s'avèrent caloriques.

La présente invention a donc pour objet une méthode destinée à réduire l'apport énergétique total journalier chez l'homme ou l'animal, caractérisée en ce qu'un ou plusieurs oligosaccharides fructosylés renfermant de 3 à 8 unités osidiques reliées par des liaisons béta, remplacent tout ou partie des sucres caloriques dans les produits destinés à l'alimentation ou à la diététique.

La méthode indiquée ci-dessus a notamment pour objet d'améliorer l'apparence physique chez l'homme en favorisant la perte de poids.

Les sucres caloriques présents dans l'alimentation sont essentiellement le saccharose mais d'autres sucres tels que le fructose, le glucose, le sirop de glucose/fructose éventuellement enrichi en fructose sont aussi utilisés.

On entend par sucres faiblement caloriques des sucres qui contrairement au saccharose sont très peu ou pas dégradés par les enzymes digestives : amylases salivaires, amylase pancréatique, disaccharidases de la bordure en brosse intestinale.

Les résultats donnés dans les exemples 1 à 3 ci-après montrent que les oligosaccharides utilisés dans la méthode de l'invention ne sont pas dégradés par les amylases sa Maires et pancréatiques et très faiblement ou pas du tout dégradés par les disaccharides de la bordure en brosse intestinale.

Compte-tenu de ces résultats, on peut s'attendre à ce que la méthode de la présente invention réduise de 5 à 20% l'apport énergétique total journalier chez l'homme.

Cette réduction peut se faire par un remplacement total ou partiel des sucres caloriques présents dans l'alimentation, tel le saccharose, par les oligosaccharides fructosylés selon la présente invention.

Les oligosaccharides fructosylés utilisés dans la méthode de la présente invention sont constitués d'unités osidiques simples reliées par des liaisons béta, l'unité osidique terminale étant une molécule de fructose.

L'invention concerne notamment une méthode destinée à réduire l'apport énergétique total journalier chez l'homme, caractérisée en ce que les oligosaccharides fructosylés utilisés sont des trisaccharides.

L'invention a notamment pour objet la méthode définie ci-dessus, caractérisée en ce que les trisaccharides utilisés sont constitués d'une molécule de saccharose et d'une molécule de glucose, les unités glucosidiques étant reliées soit par une liaison béta$_{1-2}$ pour former le sophorofructose, soit par une liaison béta$_{1-3}$ pour former le laminaribiofructose, soit par une liaison béta$_{1-4}$ pour former le cellobiofructose, soit par une liaison béta$_{1-6}$ pour former le gentiobiofructose.

L'invention a particulièrement pour objet la méthode définie ci-dessus, caractérisée en ce que les trisaccharides utilisés sont constitués d'une molécule de saccharose et d'une molécule de glucose, les unités glucosidiques étant reliées soit par une liaison béta$_{1-4}$ pour former le cellobiofructose, soit par une liaison béta$_{1-6}$ pour former le gentiobiofructose.

L'invention a plus particulièrement pour objet la méthode définie ci-dessus, caractérisée en ce que les trisaccharides utilisés sont constitués d'une molécule de saccharose et d'une molécule de glucose, les unités glucosidiques étant reliées par une liaison béta$_{1-6}$ pour former le gentiobiofructose.

Les résultats présentés dans la partie expérimentale montrent que les oligosaccharides fructosylés selon la présente invention ont des propriétés organoleptiques et physico-chimiques les rendant aptes à remplacer totalement ou partiellement le saccharose, au niveau pouvoir texturant, stabilités acide et thermique, solubilité, viscosité, rétention d'eau, pouvoir sucrant. Leur non-toxicité aigüe à la dose de 2g/kg a été démontrée chez la souris.

D'autre part, comme le saccharose, ce sont des sucres non réducteurs, qui ne donnent pas lieu à des réactions de Maillard.

Toutes ces propriétés les rendent parfaitement utilisables dans les produits alimentaires ou diététiques.

Lors de leur utilisation dans les aliments, les produits diététiques ou les boissons, les oligosaccharides peuvent être utilisés seuls, ou si nécessaire en combinaison avec d'autres édulcorants, comme par exemple le saccharose, le glucose, le sucre isomérisé, le sirop de glucose/fructose enrichi ou non en fructose, le maltose, le sorbitol, le maltitol, le lactitol, le xylitol, l'aspartame[R], l'acesulfame[R]K, la saccharine. Ils peuvent aussi être associés avec des agents de charge comme par exemple le polydextrose[R], l'amidon, les maltodextrines, le lycasin[R] et le lactose, des matières colorantes, des parfums et des assaisonnements.

L'invention concerne donc des produits ou boissons alimentaires ou diététique, caractérisés en ce que les sucres caloriques qu'ils contiennent sont remplacés totalement ou partiellement par un ou plusieurs oligosaccharides fructosylés renfermant de 3 à 8 unités osidiques reliées par des liaisons béta.

L'invention concerne particulièrement de tels produits ou boissons caractérisés en ce qu'ils renferment en poids, au moins 5% d'un ou plusieurs oligosaccharides fructosylés renfermant de 3 à 8 unités osidiques reliées par des liaisons béta.

L'invention concerne plus particulièrement de tels produits ou boissons caractérisés en ce qu'ils renferment en poids de 5 à 70% d'un ou plusieurs oligosaccharides fructosylés renfermant de 3 à 8 unités osidiques reliées par des liaisons béta.

L'invention concerne notamment de tels produits ou boissons caractérisés en ce qu'ils renferment le cellobiofructose, le gentiobiofructose, le laminaribiofructose et le sophorofructose.

L'invention concerne particulièrement de tels produits ou boissons, caractérisés en ce qu'ils renferment le cellobiofructose ou le gentiobiofructose, et tout particulièrement le gentiobiofructose.

Les oligosaccharides fructosylés peuvent être utilisés dans tous les aliments et boissons, sous forme de sirop, de poudre, de lyophilisat, sous forme cristallisée ou en morceaux.

Les termes aliments et boissons comprennent tous les aliments et boissons en général, tels que les confiseries, confitures, gâteaux, glaces et sorbets, crèmes, entremets divers, pâtés, assaisonnements, plats quotidiens, boissons carbonatées ou non, aliments pour animaux domestiques et d'une manière générale tous les produits utilisés par voie orale, ainsi que les édulcorants contenant les oligosaccharides fructosylés.

Par ailleurs, l'invention a aussi pour objet l'utilisation des oligosaccharides fructosylés renfermant de 3 à 8 unités osidiques reliées par des liaisons béta, pour préparer des produits pharmaceutiques dans le but de réduire chez l'homme l'apport énergétique total journalier et en particulier i'utilisation du gentiobiofructose, du laminaribiofructose, du sophorofructose et du cellobiofructose pour préparer de tels produits pharmaceutiques.

On utilise ces produits par exemple, pour favoriser la perte de poids chez l'homme, dans le traitement de l'obésité, du diabète ; les oligosaccharides fructosylés peuvent aussi être utilisés comme excipient sucrant dans les dentifrices, dans tous les médicaments destinés à la voie orale par exemple, dans les sirops, les pastilles, les gouttes buvables.

L'invention concerne les oligosaccharides fructosylés renfermant de 3 à 8 unités osidiques reliées par des liaisons béta, pour leur utilisation dans une méthode diététique consistant à réduite l'apport énergétique total journalier et notamment le gentiobiofructose, le laminaribiofructose, le sophorofructose et le cellobiofructose pour une telle utilisation.

Par ailleurs, l'application à titre de sucres faiblement caloriques, des oligosaccharides fructosylés renfermant de 3 à 8 unités osidiques reliées par des liaisons béta, notamment du gentiobiofructose, du laminaribiofructose, du sophorofructose et du cellobiofructose est également l'un des objets de l'invention.

Les oligosaccharides fructosylés utilisés dans la méthode de l'invention peuvent être préparés, par exemple, selon le procédé décrit par S. HESTRIN et G. AVIGAD (Biochem J., 69, 388-398, 1958) par l'action d'une lévane-saccharase (Enzyme Code E.C. 2.4.1.10) (enzyme nomenclature Academic Press. 1984-IUB) sur une solution de substrats contenant du saccharose et seuls ou en mélange, des sucres tels que le gentiobiose, le cellobiose, des oligosaccharides de degré de polymérisation de 3 à 14 obtenus par hydrolyse partielle de polymères osidiques, tels la cellulose, dont les unités osidiques simples sont reliées par des liaisons béta.

On obtient ainsi seuls ou en mélange, tous les oligosaccharides fructosylés utilisés dans la méthode de l'invention et notamment le gentiobiofructose, le cellobiofructose et des oligosaccharides, de degré de polymérisation de 3 à 15, fructosylés.

Les oligosaccharides fructosylés peuvent aussi être préparés selon un procédé d'hydrolyse enzymatique inverse réalisée en présence d'une forte concentration de substrat.

Le brevet n° WO 87/05936 décrit la synthèse enzymatique d'oligosaccharides par î'utilisation d'un tel pré cédé. Cependant, les oligosaccharides qui y sont préparés sont totalement différents des oligosaccharides fructosylés selon la présente invention car les oligosaccharides du brevet cité ne sont pas fructosylés et il n'est pas mentionné l'utilisation de saccharose comme accepteur de résidu osidique.

On soumet à l'action d'une ou plusieurs carbohydrolases un mélange constitué d'une solution concentrée de saccharose, utilisé en tant qu'accepteur de résidus osidiques, et de sucres simples ou de polymères osidiques.

Les carbohydrolases utilisées dans le procédé, qui appartiennent à la famille des glycosidases, hydrolysent les liaisons béta dans les polymères osidiques (E.C. 3.2.1.X) et, plus particulièrement les cellulases ou complexes cellulolytiques (E.C. 3.2.1.4), les laminarinases (E.C. 3.2.1.6), les béta-glucosidases (E.C. 3.2.1.21), les endo-1,3béta-glucosidases (E.C. 3.2.1.39), les glucan-1,3béta-glucosidases (E.C. 3.2.1.58), les glucan endo-1,2béta-glucosidases (E.C. 3.2.1.71), les lichenases (E.C. 3.2.1.73), les glucan-1,4béta-glucosidases (E.C.3.2.1.74), les glucan endo-1,6béta-glucosidases (E.C. 3.2.1.75) et les oxocellobiohydrolases (E.C. 3.2.1.91) sur des solutions concentrées de saccharose, et de glucose, de béta glucoside de méthyle, de cellobiose, de gentiobiose, de sophorose, de laminaribiose, d'oligodextrines dont les unités osidiques simples sont reliées par des liaisons béta, des polymères osidiques dont les unités osidiques simples sont reliées par des liaisons béta.

Tous ces donneurs de résidus osidiques sont utilisés seuls ou en mélange.

L'analyse des oligosaccharides fructosylés formés suivant l'un ou l'autre des procédés peut être effectuée par exemple par HPLC phase inverse sur une colonne Nucléosit[R]C18.

La structure des oligosaccharides fructosylés formés peut être confirmée, par exemple, par RMN du carbone 13 et du proton après isolement, à l'état pur, de ces oligosaccharides par HPLC phase inverse sur colonne préparative Nucléosit[R] C18. L'éluant est l'eau, pour les oligosaccharides ayant un degré de polymérisation compris entre 3 et 5 ou un mélange adéquat eau/méthanol pour ceux ayant un degré de polymérisation supérieur ou égal à 5.

Les oligosaccharides fructosylés utilisés dans la méthode de l'invention peuvent être isolés et purifiés, de façon préparative, en utilisant par exemple, la chromatographie sur poudre de charbon activé, la chromatographie par échange d'ions, à partir du mélange de sucres obtenu par l'un ou l'autre des procédés.

On peut également utiliser le mélange d'oligosaccharides tel quel.

Les exemples donnés ci-arpès illustrent l'invention.

**Exemple 1 : Hydrolyse du gentiobiofructose et du cellobiofructose par les alpha amylases sallvaires humaines et pancréatique porcine.**

**1.1 : Préparation de la solution de gentiobiofructose ou de cellobiofructose.**

La synthèse de gentiobiofructose ou de cellobiofructose est effectuée par action d'une lévane-saccharase sur une solution de substrat contenant du saccharose et du gentiobiose (cellobiose) selon le procédé décrit par S. HESTRIN et G. AVIGAD.

Le gentiobiofructose (cellobiofructose) formé est ensuite isolé et purifié à partir du milieu réactionnel par HPLC semi-préparative en phase inverse (colonne Nucloésil[R]C18 - éluant : eau), concenté puis lyophilisé.

Le produit est ensuite dissous dans du tampon phosphate de sodium, 0,1 M (pH 7.0), de façon à obtenir une concentration finale de 3 g/l d'oligosaccharide fructosylé.

**1.2 : Essal d'hydrolyse par l'alpha amylase salivaire humaine.**

Le mélange comprenant 2 ml de la solution d'oligosaccharide fructosylé (préparée en 1.1.) et 17,8 unités d'alpha amylase salivaire humaine (SIGMA Réf. A 0521) est incubé 2 heures à 37 ⊠ C.

Au bout de 2 heures, la réaction est arrêtée par chauffage. Le glucose apparu est mesuré par la méthode enzymatique à la glucose oxydase/peroxydase (test Boehringer Réf. 124036). De la même façon un essai témoin est effectué avec des maltodextrines type glucidex[R]21 (Sté Roquette, France).

Les résultats obtenus sont donnés en micromoles de glucose formé par unité d'enzyme et par heure.

| Substrat | Activité de l'alpha amylase salivaire humaine |
|---|---|
| Maltodextrines | 235 |
| Gentiobiofructose | 0 |
| Cellobiofructose | 0 |

4

**1.3 : Essai d'hydrolyse par l'alpha amylase pancréatique porcine.**

Le mélange contenant 2 ml de la solution d'oligosaccharide fluctosylé (préparé en 1.1) et 19 unités d'alpha amylase pancréatique porcine (SIGMA Réf. A1278) est incube 2 heures à 37 ⊠ C.

La réaction est arrêtée par chauffage. Le glucose apparu est mesure par la méthode enzymatique à la glucose oxydase/peroxydase (Test Boehringer Réf. 124036).

Un essai témoin est effectué avec des maltodextrines type glucidex[R]21 (Sté Roquette, France).

Les résultats sont exprimés en micromoles de glucose formé/unité d'enzyme/heure.

| Substrat | Activité de l'alpha amylase pancréatique porcine |
|---|---|
| Maltodextrines | 224 |
| Gentiobiofructose | 0 |
| Cellobiofructose | 0 |

**Exemple 2 : <u>Hydrolyse des oligosaccharides fructosuylés par un homgénat de jejunum de rat</u>. 2.1 : Préparation des oligosaccharides frucotsylés.**

La synthèse des oligosaccharides fructosylés est effectuée par action d'une lévane-saccharase sur une solution de substrats renfermant du saccharose et du gentiobiose (cellobiose ou un hydrolysat de cellulose) selon le procédé décrit par S. HESTRIN et G. AVIGAD.

Les oligosaccharides formés sont purifiés par HPLC semi préparative (colonne Nucléosil[R]C18 - éluant : eau) puis lyophilisés.

Les produits sont dissous, ensuite, dans un tampon phosphate de sodium 0,05 M, pH 6.0 de façon à avoir une concentration molaire de 2,924 mmoles/l.

**2.2 : Préparation de l'homogénat de jejunum de rat**

5 cm de jejunum sont prélevés sur un rat mâle Sprague Dawley (préalablement mis à la diète pendant 24 heures) et rinces par une solution de sérum physiologique.

Le jejunum (pesant environ 150 mg) est broyé en présence de NaCl 0,9% (p/V) à l'aide d'un homogénéisateur type "Polytron", puis le broyat est amené à 10 ml (avec la solution de NaCl 0,9%).

**2.3 : Hydrolyse des oligosaccharides fructosylés par l'homogénat de jejunum de rat.**

Le mélange réactionnel contenant 2 ml de la solution d'oligosaccharide fructosylé et 2 ml d'homogénat est mis à incuber pendant 24 heures à 37 ⊠ C, sous agitation magnétique.

Des prélèvements sont effectués à intervalles réguliers, et les enzymes intestinales sont inactivées thermiquement.

Un essai est effectué en parallèle sur une solution témoin renfermant du saccharose.

Le glucose libéré, au cours du temps, est dosé par la méthode enzymatique à la glucose oxydase/peroxydase.

Le degré d'hydrolyse est calculé comme suit :

$$DH\% = \frac{glucose~libéré~(ug)}{glucose~total~libérable~(ug)} \times 100$$

TABLEAU I

| Temps (heures) | Saccharose DH % | Gentiobiofructose DH % | Cellobiofructose DH % |
|---|---|---|---|
| 0 | 0 | 0 | 0 |
| 8 h 30 | 57.6 | 0 | 0 |
| 17 h 30 | 66.7 | 0.4 | 3.7 |
| 24 h 00 | 92.7 | 0.4 | 5.4 |

Dans une deuxième série d'essais, on a suivi l'évolution, au cours du temps, de la composition de l'oligosaccharide fructosylé par HPLC phase inverse (colonne Nucléosil[R]C18 - éluant : eau), le sucre témoin étant toujours le saccharose.

Les résultats sont donnés dans le tableau II.

**TABLEAU II**

| Produits testés | Temps (heures) | Composition en carbohydrate % *1 | | | | | |
|---|---|---|---|---|---|---|---|
| | | Glucose + Fructose | Saccharose | Gentiobio fructose | Cellobio fructose | DP$_3$F | DP$_4$F |
| Saccha-rose | 0h | 0 | 100 | - | - | - | - |
| | 8h30 | - | - | - | - | - | - |
| | 24h00 | 96 | 4 | - | - | - | - |
| Gentiobio fructose | 0 | 0 | - | 100 | - | - | - |
| | 8h30 | 0 | ND *2 | 100 | - | - | - |
| | 24h00 | 0.4 | ND | 99,6 | - | - | - |
| Cellobio fructose | 0h | 0 | - | - | 100 | - | - |
| | 8h30 | 3.0 | ND | - | 97.0 | - | - |
| | 24h00 | 6.4 | ND | - | 93.6 | - | - |
| DP$_3$F | 0h | 0 | - | - | - | 100 | - |
| | 24h | 5 | - | - | - | 95 | - |
| DP$_4$F | 0h | 0 | - | - | - | - | 100 |
| | 24h | 5 | - | - | - | - | 95 |

DP = Degré de polymérisation

$$*1 : \text{\% HPLC} = \frac{\text{Surface du pic considéré}}{\text{Surface représentée par tous les pics}} \times 100$$

*2 : Non détectable.

## Exemple 3 : Hydrolyse des oligosaccharides fructosylés par un homogénat de muqueuse jejunale humaine.

### 3.1 : Préparation des solutions de gentiobiofructose ou de cellobiofructose.

Elle est identique à celle donnée dans l'exemple 2 paragraphe 2.1.

### 3.2 : Préparation de l'homogénat de muqueuse jejunale humaine.

La muqueuse jejunale (environ 40 mg) est homogénéisée en présence d'une solution aqueuse de NaCl 0,9% (poids/volume) à l'aide d'un homogénéiateur type "Polytron", puis l'homogénat est amené à 12 ml (avec la solution de NaCl 0,9%).

**3.3 : Hydrolyse du gentiobiofructose ou du cellubiofructose par l'homogénat de muqueuse jejunale humaine.**

Le mélange réactionnel contenant 2 ml de la solution d'oligosaccharide fructosylé et 2 ml d'homogénat est mis à incuber pendant 24 heures à 37 °C sous agitation magnétique.

Des prélèvements sont effectués à intervalles réguliers, et les enzymes intestinales sont inactivées thermiquement.

Un essai est effectué en parallèle sur une solution témoin renfermant du saccharose.

Le glucose libéré au cours du temps est dosé par la méthode enzymatique à la glucose oxydase/peroxydase.

Le degré d'hydrolyse est calculé comme suit :

$$DH\% = \frac{\text{glucose libéré ug}}{\text{glucose total libérable (ug)}} \times 100$$

TABLEAU III

| Temps (heures) | Saccharose DH % | Gentiobiofructose DH % | Cellobiofructose DH % |
|---|---|---|---|
| 0 h | 0 | 0 | 0 |
| 10 h | 57.1 | 0 | 0 |
| 24 h 00 | 88.0 | 0 | 0 |

**Conslusion des exemples 1 à 3.**

Ainsi qu'on peut le constater en regardant les tableaux 1 à 3, les résultats montrent que les oligosaccharides fructosylés sont très peu hydrolysés par les enzymes de la bordure en brosse intestinale du rat et de l'homme, à la différence du saccharose.

De plus les résultats de l'exemple 1 montrent l'absence totale d'hydrolyse par î'alphaamylase salivaire humaine, et l'alphaamylase pancréatique de porc.

On peut en conclure que les oligosaccharides fructosylés conviennent comme édulcorants à faible pouvoir calorique.

**Exemple 4 :**

Un sorbet aux framboises témoin contenant du saccharose a été préparé selon la recette suivante :

Sorbet aux framboises (témoin) :

. 200 g de Saccharose
. 200 g d'eau
. 40 g de glucose Cristal R marque CPC
. 400 g de framboises
. 2 g de pectine de pomme
. 1 cuillère à soupe de jus de citron
. sirop de sucre ajusté à 18 ° Baumé.

Le même sorbet aux framboises a été fait comme le sorbet témoin, excepté que les 200 g de Saccharose ont été remplacés par du cellobiofructose, préparé selon le procédé décrit par S. HESTRIN et G. AVIGAD.

Les conditions opératoires ont été strictement identiques pour les 2 essais.

Selon un panel entraîné de 10 personnes, il n'y a aucune différence significative, au niveau de la saveur sucrée, entre le témoin saccharose et l'essai cellobiofructose.

De plus, ces personnes ont noté une meilleure consistance du sorbet selon l'invention, qui se liquéfie moins vite que le sorbet témoin.

**Exemple 5:**

Une glace aux oeufs à la vanille témoin contenant du saccharose a été préparée selon la recette suivante :

<u>Glace aux oeufs à la vanille</u> (témoin) :

- . 100 g de Saccharose
- . 500 ml de lait demi-écrémé
- . 20 g de poudre de lait écrémé
- . 40 g de Trimoline R (sucre inverti)
- . 1 g de pectine de pomme
- . 1 demi gousse de vanille
- . 3 jaunes d'oeufs (oeufs de 60 g)
- . 40 g de crème fraîche.

Une glace aux oeufs à la vanille test a été préparée selon le même mode opératoire par simple remplacement des 100 g de saccharose par 100 g de cellobiofructose obtenu selon le procédé décrit pas S. HESTRIN et G. AVIGAD.

Selon un panel entraîné de 10 personnes, aucune différence significative n'existe entre la préparation test et la préparation témoin.

Toutes les personnes se sont accordées pour trouver une meilleure consistance à la préparation test.

**Exemple 6:**

Une brioche témoin contenant du saccharose a été préparée selon la recette suivante :

<u>Brioche</u> (témoin) :

- . 20 g de Saccharose
- . 7,5 g de levure de boulanger
- . 250 g de farine (type 45)
- . 5 g de sel
- . 2 oeufs de 60 g
- . 100 g de beurre
- . 4 cuillères à soupe d'eau.

Une brioche test a été préparée selon le même mode opératoire par simple remplacement des 20 g de saccharose par 20 g de cellobiofructose obtenu selon le procédé décrit pas S. HESTRIN et G. AVIGAD.

Selon un panel entraîné de 10 personnes, aucune différence significative n'existe entre la préparation test et la préparation témoin.

**Exemple 7:**

Une génoise témoin contenant du saccharose a été préparée selon la recette suivante :

<u>Génoise</u> (témoin) :

- . 100 g de Saccharose
- . 3 oeufs
- . 50 g de farine
- . 50 g de poudre à biscuit Difal.

Une génoise test a été préparée selon le même mode opératoire par simple remplacement des 100 g de saccharose par 100 g de cellobiofructose obtenu selon le procédé décrit pas S. HESTRIN et G. AVIGAD.

**Exemple 8:**

Une crème pâtissière témoin contenant du saccharose a été préparée selon la recette suivante :

<u>Crème pâtissière</u> (témoin) :

- . 100 g de Saccharose
- . 500 ml de lait demi-écrémé
- . 1 oeuf de 60 g

. 1 jaune d'oeuf
. 20 g de farine
. 20 g de poudre à crème Difal.

Une crème patissière test a été préparée selon le même mode opératoire par simple remplacement des 100 g de saccharose par 100 g de cellobiofructose obtenu selon le procédé décrit pas S. HESTRIN et G. AVIGAD, supplémentés de 0,6 g d'ASPARTAM.

Un panel entraîné de 10 personnes n'a pas observé de différence significative entre les 2 préparations.

## Revendications

1.  Méthode destinée à réduire l'apport énergétique total journalier chez l'homme ou l'animal, caractérisée en ce qu'un ou plusieurs oligosaccharides fructosylés renfermant de 3 à 8 unités osidiques reliées par des liaisons béta dont au moins une liaison béta encre 2 unités glucosidiques, remplacent tout ou partie des sucres caloriques dans les produits destinés à l'alimentation ou à la diététique.

2.  Méthode telle que définie par la revendication 1, caractérisée en ce que les oligosaccharides fructosylés utilisés sont des trisacharides.

3.  Méthode telle que définie par la revendication 1 ou 2, caractérisée en ce que les trisaccharides utilisés sont constitués d'une molécule de saccharose et d'une molécule de glucose, les unités glucosidiques étant reliées soit par une liaison $béta_{1-2}$ pour former le sophorofructose, soit par une liaison $béta_{1-3}$ pour former le laminaribiofructose, soit par une liaison $béta_{1-4}$ pour former le cellobiofructose, soit par une liaison $béta_{1-6}$ pour former le gentiobiofructose.

4.  Méthode telle que définie par l'une quelconque des revendications 1 à 3, caractérisée en ce que les trisaccharides utilisés sont constitués d'une molécule de saccharose et d'une molécule de glucose, les unités glucosidiques étant reliées soit par une liaison $béta_{1-4}$ pour former le cellobiofructose, soit par une liaison $béta_{1-6}$ pour former le gentiobiofructose.

5.  Méthode telle que définie par l'une quelconque des revendications 1 à 4, caractérisée en ce que les trisaccharides utilisés sont constitués d'une molécule de saccharose et d'une molécule de glucose, les unités glucosidiques étant réliées par une liaison $béta_{1-6}$ pour former le gentiobiofructose.

6.  Produits ou boissons alimentaires ou diététiques pour leur utilisation dans une méthode selon l'une quelconque des revendications 1 à 5, caractérisés en ce que les sucres caloriques qu'ils contiennent sont remplacés totalement ou partiellement par un ou plusieurs oligosaccharides fructosylés renfermant de 3 à 8 unités osidiques reliées par des liaisons béta dont au moins une liaison béta entre 2 unités glucosidiques.

7.  Produits ou boissons alimentaires ou diététiques tels que définis par la revendication 6, caractérisés en ce qu'ils renferment en poids, au moins 5 % d'un ou plusieurs oligosaccharides fructosylés renfermant de 3 à 8 unités osidiques reliées par des liaisons béta.

8.  Produits ou boissons alimentaires ou diététiques tels que définis par la revendication 6 ou 7, caractérisés en ce qu'ils renferment en poids, de 5 à 70 % d'un ou plusieurs oligosaccharides fructosylés renfermant de 3 à 8 unités osidiques reliées par des liaisons béta.

9.  Produits ou boissons alimentaires ou diététiques tels que définis par l'une quelconque des revendications 6 ou 8, caractérisés en ce qu'ils renferment le cellobiofructose, le gentiobiofructose, le laminaribiofructose ou le sophorofructose.

10. Produits ou boissons alimentaires ou diététiques tels que définis par l'une quelconque des revendications 6 ou 9, caractérisés en ce qu'ils renferment le cellobiofructose ou le gentiobiofructose.

11. Produits ou boissons alimentaires ou diététiques tels que définis par l'une quelconque des revendications 6 ou 10, caractérisés en ce qu'ils renferment le gentiobiofructose.

**12.** Utilisation des oligosaccharides fructosylés renfermant de 3 à 8 unités osidiques reliées par des liaisons béta dont au moins une liaison béta entre 2 unités glucosidiques, pour préparer des produits pharmaceutiques dans le but de réduire chez l'homme l'apport énergétique total journalier.

**13.** Utilisation selon la revendication 12 du gentiobiofructose, du laminaribiofructose, du sophorofructose et du cellobiofructose pour préparer des produits pharmaceutiques dans le but de réduire chez l'homme l'apport énergétique total journalier.

**14.** Utilisation selon l'une des revendications 12 ou 13 du gentiobiofructose et du cellobiofructose pour préparer des produits pharmaceutiques dans le but de réduire chez l'homme l'apport énergétique total journalier.

**15.** Utilisation selon l'une des revendications 12 ou 14 du gentiobiofructose pour préparer des produits pharmaceutiques dans le but de réduire chez l'homme l'apport énergétique total journalier.

**16.** Oligosaccharides fructosylés renfermant de 3 à 8 unités osidiques reliées par des liaisons béta dont au moins une liaison béta entre 2 unités glucosidiques, pour leur utilisation dans une méthode diététique consistant à réduire l'apport énergétique total journalier.

**17.** Gentiobiofructose, laminaribiofructose, sophorofructose et cellobiofructose pour leur utilisation dans une méthode diététique consistant à réduire l'apport énergétique total journalier.

**18.** Utilisation à titre de sucres faiblement caloriques, des oligosaccharides fructosylés renfermant de 3 à 8 unités osidiques reliées par des liaisons béta dont au moins une liaison béta entre 2 unités glucosidiques.

**19.** Utilisation à titre de sucres faiblement caloriques, du gentiobiofructose, du laminaribiofructose, du sophorofructose et du cellobiofructose.

## Claims

**1.** Method intended to reduce the daily total energy intake in man or animals, characterized in that one or more fructosylated oligosaccharides containing 3 to 8 monose units linked by beta bonds, at least one of which is a beta bond between 2 glucoside units, replace all or part of the caloric sugars in products intended for food products or dietetic products.

**2.** Method as defined by claim 1, characterized in that the fructosylated oligosaccharides used are trisaccharides.

**3.** Method as defined by claim 1 or 2, characterized in that the trisaccharides used are constituted by a saccharose molecule and a glucose molecule, the glucoside units being linked either by a $beta_{1-2}$ bond in order to form sophorofructose, or by a $beta_{1-3}$ bond in order to form laminaribiofructose, or by a $beta_{1-4}$ bond in order to form cellobiofructose, or by a $beta_{1-6}$ bond in order to form gentiobiofructose.

**4.** Method as defined by any one of claims 1 to 3, characterized in that the trisaccharides used are constituted by a molecule of saccharose and a molecule of glucose, the glucoside units being linked either by a $beta_{1-4}$ bond in order to form cellobiofructose, or by a $beta_{1-6}$ bond in order to form gentiobiofructose.

**5.** Method as defined by any one of claims 1 to 4, characterized in that the trisaccharides used are constituted by a molecule of saccharose and a molecule of glucose, the glucoside units being linked by a $beta_{1-6}$ bond in order to form gentiobiofructose.

**6.** Food or dietetic products or drinks for their use in a method according to any one of claims 1 to 5, characterized in that the caloric sugars that they contain are totally or partially replaced by one or more fructosylated oligosaccharides containing 3 to 8 monose units linked by beta bonds.

**7.** Food or dietetic products or drinks as defined by claim 6, characterized in that they contain, by weight, at least 5% of one or more fructosylated oligosaccharides containing 3 to 8 monose units linked by beta bonds, at least one of which is a beta bond between 2 glucoside units.

**8.** Food or dietetic products or drinks as defined by claim 6 or 7, characterized in that they contain, by weight, from 5 to 70% of one or more fructosylated oligosaccharides containing 3 to 8 monose units linked by beta bonds.

# EP 0 337 889 B2

9. Food or dietetic products or drinks as defined by any one of claims 6 to 8, characterized in that they contain cellobiofructose, gentiobiofructose, laminaribiofructose or sophorofructose.

10. Food or dietetic products or drinks as defined by any one of claims 6 or 9, characterized in that they contain cellobiofructose or gentiobiofructose.

11. Food or dietetic products or drinks as defined by any one of claims 6 to 10, characterized in that they contain gentiobiofructose.

12. Use of fructosylated oligosaccharides containing 3 to 8 monose units linked by beta bonds, at least one of which is a beta bond between 2 glucoside units, for preparing pharmaceutical products with the aim of reducing the daily total energy intake in man.

13. Use according to claim 12 of gentiobiofructose, laminaribiofructose, sophorofructose and cellobiofructose for preparing pharmaceutical products with the aim of reducing the daily total energy intake in man.

14. Use according to one of claims 12 or 13 of gentiobiofructose, and of cellobiofructose, for preparing pharmaceutical products with the aim of reducing the daily total energy intake in man.

15. Use according to one of claims 12 or 14 of gentiobiofructose for preparing pharmaceutical products with the aim of reducing the daily total energy intake in man.

16. Fructosylated oligosaccharides containing 3 to 8 monose units linked by beta bonds, at least one of which is a beta bond between 2 glucoside units, for their use in a dietetic method consisting of reducing the daily total energy intake.

17. Gentiobiofructose, laminaribiofructose, sophorofructose and cellobiofructose for their use in a dietetic method consisting of reducing the daily total energy intake.

18. Use as low-calorie sugars of fructosylated oligosaccharides containing 3 to 8 monose units linked by beta bonds at least one of which is a beta bond between 2 glucoside units.

19. Use as low-calorie sugars of gentiobiofructose, laminaribiofructose, sophorofructose and cellobiofructose.

## Patentansprüche

1. Verfahren zur Herabsetzung der täglichen Gesamtenergiezufuhr beim Menschen oder Tier, dadurch gekennzeichnet, daß ein oder mehrere fructosylierte Oligosaccharide,die 3 bis 8 über β-Bindungen gebundene, osidische Einheiten enthalten, wobei sich zumindest eine dieser β-Bindungen zwischen 2 glucosidischen Einheiten befindet, ganz oder teilweise kalorienhaltige Zucker in den für die Ernährung oder die Diätetik bestimmten Produkten ersetzen.

2. Verfahren gemäß Anspruch 1, dadurch gekennzeichnet, daß die verwendeten fructosylierten Oligosaccharide Trisaccharide sind.

3. Verfahren gemäß Anspruch 1 oder 2, dadurch gekennzeichnet, daß die verwendeten Trisaccharide aus einem Molekül Saccharose und einem Molekül Glucose bestehen, wobei die glucosidischen Einheiten entweder über eine $\beta_{1-2}$-Bindung gebunden sind, um die Sophorofructose zu bilden, oder über eine $\beta_{1-3}$-Bindung, um die Laminaribiofructose zu bilden, oder über eine $\beta_{1-4}$-Bindung, um die Cellobiofructose zu bilden, oder über eine $\beta_{1-6}$-Bindung, um die Gentiobiofructose zu bilden.

4. Verfahren gemäß einem der Ansprüche 1 bis 3, dadurch gekennzeichnet, daß die verwendeten Trisaccharide aus einem Molekül Saccharose und einem Molekül Glucose bestehen, wobei die glucosidischen Einheiten entweder über eine $\beta_{1-4}$-Bindung gebunden sind, um die Cellobiofructose zu bilden, oder über eine $\beta_{1-6}$-Bindung, um die Gentiobiofructose zu bilden.

5. Verfahren gemäß einen der Ansprüche 1 bis 4, dadurch gekennzeichnet, daß die verwendeten Trisaccharide aus einem Molekül Saccharose und einem Molekül Glucose bestehen, wobei die glucosidischen Einheiten über eine $\beta_{1-6}$-Bindung gebunden sind, um die Gentiobiofructose zu bilden.

12

6. Nährmittel- oder diätetische Produkte oder Getränke für die Verwendung bei einem Verfahren gemäß einem der Ansprüche 1 bis 5, dadurch gekennzeichnet, daß die kalorienhaltigen Zucker, die sie enthalten, ganz oder teilweise durch ein oder mehrere fructosylierte Oligosaccharide mit 3 bis 8 über $\beta$-Bindungen gebundenen, osidischen Einheiten ersetzt sind, wobei sich zumindest eine dieser $\beta$-Bindungen zwischen 2 glucosidischen Einheiten befindet.

7. Nährmittel- oder diätetische Produkteoder Getränke, wie in Anspruch 6 definiert, dadurch gekennzeichnet, daß sie, auf das Gewicht bezogen, zumindest 5% eines oder mehrerer fructosylierter Oligosaccharide mit 3 bis 8 über $\beta$-Bindungen gebundenen, osidischen Einheiten enthalten.

8. Nährmittel- oder diätetische Produkte oder Getränke, wie in Anspruch 6 oder 7 definiert, dadurch gekennzeichnet, daß sie, auf das Gewicht bezogen, 5 bis 70% eines oder mehrerer fructosylierter Oligosaccharide mit 3 bis 8 über $\beta$-Bindungen gebundenen, osidischen Einheiten enthalten.

9. Nährmittel- oder diätetische Produkte oder Getränke,wie in einem der Ansprüche 6 oder 8 definiert, dadurch gekennzeichnet, daß sie Cellobiofructose, Gentiobiofructose, Laminaribiofructose oder Sophorofructose enthalten.

10. Nährmittel- oder diätetische Produkte oder Getränke, Wie in einem der Ansprüche 6 oder 9 definiert, dadurch gekennzeichnet, daß sie Cellobiofructose oder Gentiobiofructose enthalten.

11. Nährmittel- oder diätetische Produkte oder Getränke, wie in einem der Ansprüche 6 oder 10 definiert, dadurch gekennzeichnet, daß sie Gentiobiofructose enthalten.

12. Verwendung der fructosylierten Oligosaccharide mit 3 bis 8 über $\beta$-Bindungen gebundenen, osidischen Einheiten, wobei sich zumindest eine dieser $\beta$-Bindungen zwischen 2 glucosidischen Einheiten befindet, für die Herstellung von pharmazeutischen Produkten zur Reduzierung der täglichen energetischen Gesamtzufuhr beim Menschen.

13. Verwendung gemäß Anspruch 12 von Gentiobiofructose, Laminaribiofructose, Sophorofructose und Cellobiofructose zur Herstellung von pharmazeutischen Produkten für die Reduzierung der täglichen energetischen Gesamtzufuhr beim Menschen.

14. Verwendung gemäß einem der Ansprüche 12 oder 13 von Gentiobiofructose und Cellobiofructose zur Herstellung von pharmazeutischen Produkten für die Reduzierung der täglichen energetischen Gesamtzufuhr beim Menschen.

15. Venwendung gemäß einem der Ansprüche 12 oder 14 von Gentiobiofructose zur Herstellung von pharmazeutischen Produkten für die Reduzierung der täglichen energetischen Gesamtzufuhr beim Menschen.

16. Fructosylierte Oligosaccharide mit 3 bis 8 über $\beta$-Bindungen gebundenen, osidischen Einheiten, wobei sich zumindest eine dieser $\beta$-Bindungen zwischen 2 glucosidischen Einheiten befindet, für die Verwendung bei einem diätetischen Verfahren, das darin besteht, die tägliche energetische Gesamtzufuhr zu reduzieren.

17. Gentiobiofructose, Laminaribiofructose, Sophorofructose und Cellobiofructose zu deren Verwendung bei einem diätetischen Verfabren, das darin besteht, die tägliche energetische Gesamtzufuhr zu reduzieren.

18. Verwendung von fructosylierten Oligosacchariden mit 3 bis 8 über $\beta$-Bindungen gebundenen, osidischen Einheiten, wobei sich zumindest eine dieser $\beta$-Bindungen zwischen 2 glucosidischen Einheiten befindet, als schwach kalorienhaltige Zucker.

19. Verwendung von Gentiobiofructose, Laminaribiofructose, Sophorofructose und Cellobiofructose als schwach kalorienhaltige Zucker.